# EUROPEAN PATENT APPLICATION

(11) **EP 1 947 401 A1**
(43) Date of publication of application: **23.07.2008**
(21) Application number: 07001142.4
(22) Date of filing: 19.01.2007
(51) Int. Cl.: F24J 2/34, F24J 2/24, F24J 2/50, F24D 3/08

(54) **Energy collector**

(71) Applicant: Solorno Systems S.L., 35508 Costa Teguise, Lanzarote Las Palmas (ES)
(72) Inventor: Wheatley, Kevin, Tias 35510 Lanzarote (ES); Jones, Paul, Tias 35510 Lanzarote (ES)
(74) Representative: Moore, Christopher Mark

(57) **Abstract**

A solar energy collector (1) is disclosed which comprises an enclosure and tubing (7) located therein. The enclosure comprises a base (21) and a cover (9, 10, 11, 12, 13). The base (21) comprises a thermal energy storage layer (4) and the cover (9, 10, 11, 12,13) comprises a cover sheet (13) and an insulating layer (10, 11, 12). The tubing (7) is located between the cover (9, 10, 11, 12, 13) and the thermal energy storage means (4). Water heating apparatus incorporating the collector (1) are also enclosed.

## Description

The present invention relates to energy collectors, for example solar energy collectors. More specifically, but not exclusively, the present invention relates to solar energy collectors for heating a fluid, for example water, flowing therethrough.

Solar energy collectors for domestic and industrial use are known and there are several different types in existence. The present invention is mainly concerned with flat plate type solar energy collectors.

Flat plate collector designs generally consist of a flat plate absorber and one or more tubes placed in a heat insulating casing having a transparent cover sheet. The absorber generally consists of a copper or plastic plate to which a black coating is applied. The tubing is generally provided in the form of a grid or spiral coil and may also include a black coating. In use, the plate and/or the tubing absorbs solar energy, which is then transmitted to a working fluid flowing through the tubes.

Typically, a collector is either placed on, or forms part of, the roof of a building or on a wall facing the sun. Free standing collectors are also known. Circulation of the working fluid is generally effected either by a pump or by convection.

Some arrangements include a heat exchanger through which the working fluid is circulated in order to transfer the heat to a secondary fluid circuit. It is also known for the heated fluid to be used directly where the application and/or the thermal collector design permits.

In the latter case, cold or ambient water is circulated through the collector where it is heated from wherein it flows into a collection tank for storage and subsequent use.

However, existing collector designs generally require low flow rates in order to maximise the absorbed heat energy. In order to mitigate this issue, multiple collectors may be connected in series in order to increase heat absorption capacity, thereby to provide sufficient heat energy for domestic applications.

It is a non-exclusive object of the present invention to provide an improved energy collector, for example one which transfers collected heat energy to a working fluid more uniformly over time.

It is a further non-exclusive object of the invention to provide a collector which absorbs more heat energy per unit area than prior art thermal collectors.

It is yet a further non-exclusive object of the invention to provide a water heating system which minimises the loss of heat energy.

Accordingly, one aspect of the invention provides an energy collector for absorbing solar energy comprising an enclosure and tubing located therein, the enclosure comprising a base and a cover, the base comprising thermal energy storage means, the cover comprising a cover sheet and an insulating layer, the tubing being at least partially located between the cover and said thermal energy storage means.

It has been observed that the use of an insulating layer in the cover improves the effectiveness of the collector.

Preferably, at least a portion of the tubing is spaced from the cover. The collector may comprise one or more spacers for separating adjacent portions of tubing. The insulating layer may comprise a layer of air cellular material, for example covering the whole or part of the surface area of the cover. The air cellular material preferably comprises one or more layers, for example two layers. The thickness of the or each layer of air cellular material may be, for example, four to ten millimetres, preferably six millimetres, In the case of more than one layer, each layer may comprise a different thickness. The cells of the air cellular material may be, for example, five to fifteen millimetres in diameter, preferably ten millimetres in diameter. Additionally or alternatively, the insulating layer may comprise a further thermal energy storage means.

Optionally, said thermal energy storage means and/or said further thermal energy storage means comprises a thermal energy storage layer and/or a further thermal energy storage layer consisting of, for example, a heat sink comprising, for example, a ceramic and/or mineral material. Preferably, said thermal energy storage means and/or said further thermal energy storage means comprises a ceramic and/or mineral material, for example a granular stone material expelled from volcanoes, such as picon.

The tubing may comprise tubing in the shape of a coil. Alternatively, the tubing may comprise a single tube or a plurality of tubes in the form of a grid. The or each tube may have an inlet and an outlet. In the case of a plurality of tubes, the outlet of one tube may be connected to the inlet of another tube.

The cover sheet is preferably at least partially transparent, for example translucent- The cover sheet may comprise clear or tinted glass. Preferably, the cover sheet is five to seven millimetres in thickness. More preferably, the cover sheet is five millimetres in thickness.

The cover may further comprise a support sheet which is at least partially transparent, for example translucent. The support sheet may be located between the insulating layer and the tubing. The support sheet may comprise clear or tinted glass. Preferably, the support sheet is four to six millimetres in thickness. More preferably, the support sheet is five millimetres in thickness- Alternatively, the support sheet may comprise a mesh, for example a metal grid.

Preferably, the cover sheet has a larger area in plan than said further energy storage means, thereby to expose an absorption surface of said thermal energy storage means for absorbing solar energy. More preferably, at least part of the absorption surface is an upper surface of the further thermal energy storage layer.

The enclosure may comprise a peripheral wall and may be square or rectangular in plan. At least a portion of the base may comprise an insulating layer. At least a portion of the peripheral wall may comprise an insulating layer. The enclosure may be hermetically sealed.

A further aspect of the invention provides an energy collector for absorbing solar energy comprising an absorption surface, a thermal energy storage layer and tubing having an inlet and an outlet for fluid to pass therethrough, at least a portion of the tubing being in thermal contact with the thermal energy storage layer, wherein the thermal energy storage layer comprises a ceramic or mineral material.

Preferably, the thermal energy storage layer comprises a porous granular stone material, such as that expelled from volcanoes.

The collector may comprise an enclosure, for example with a cover, a base and/or a peripheral wall. The collector may be square or rectangular in plan. At least a portion of the base may comprise an insulating layer. At least a portion of the peripheral wall may comprise an insulating layer- The enclosure may be hermetically sealed.

The collector may further comprise an alternative heating source, for example a gas powered or electrical heating source. The heating source may comprise a heater mat.

A further aspect of the invention provides a water storage tank comprising insulating members therein, for example polystyrene balls. Preferably, the tank includes a casing comprising insulating material, for example polystyrene sheet material.

The invention will now be more fully described, by way of example only, with reference to the accompanying drawings in which:
Figure 1 is a simplified partial section view along a vertical plane of a first embodiment of an energy collector according to the invention;
Figure 2a is a plan view of the frame of the energy collector of Figure 1;
Figure 2b is a section view of the frame of Figure 2a along line A-A;
Figure 3 is a plan view of the base plate of the energy collector of Figure 1;
Figure 4 is a plan view of the energy collector of Figure 1 with the cover sheet removed;
Figure 5 is a plan view of a second embodiment of the energy collector of the invention;
Figure 6 is a plan view of a third embodiment of the energy collector of the invention;
Figure 7 is a plan view of a fourth embodiment of the energy collector of the invention;
Figure 8 is a plan view of an alternative support sheet for an energy collector of the invention;
Figure 9 is a simplified schematic drawing of a domestic water heating system incorporating two energy collectors of Figure 1;
Figure 10 is a graph showing temperature profiles over time of day for the domestic water heating system of Figure 9;
Figure 11 is a simplified schematic drawing of a further domestic water heating system incorporating two energy collectors of Figure 1;
Figure 12 is a simplified schematic drawing of a water heating system for a swimming pool incorporating a second embodiment of energy collectors; and
Figure 13 is a graph showing average temperatures over time of year for the water heating system of Figure 12.

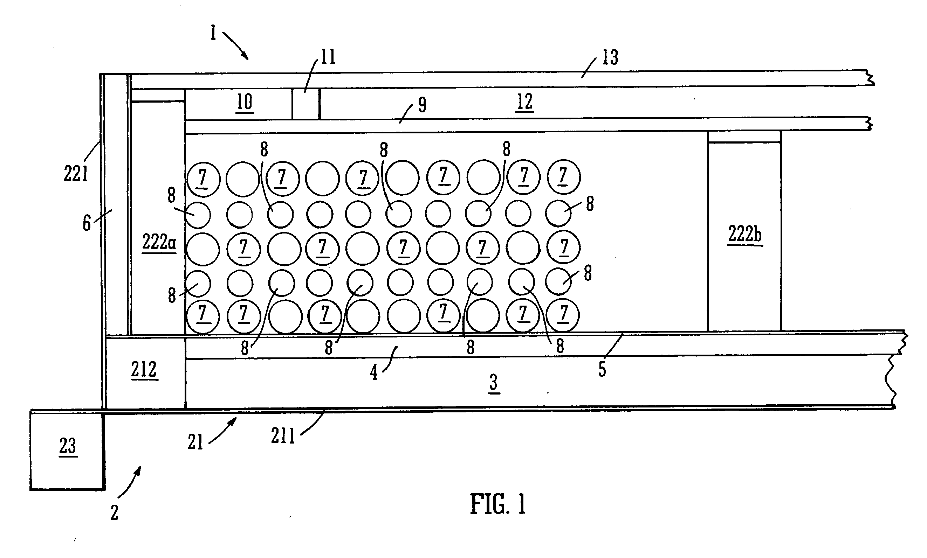

Referring to Figure 1, there is shown an energy collector 1 comprising a frame 2, a base insulating layer 3, a lower energy storage layer 4, a base plate 5, a peripheral wall insulating layer 6. a coil of working fluid tubing 7, spacer tubing 8, a support sheet 9, a layer of air cellular cushioning material 10, a spacer element 11, an upper thermal energy storage layer 12, and a cover sheet 13.

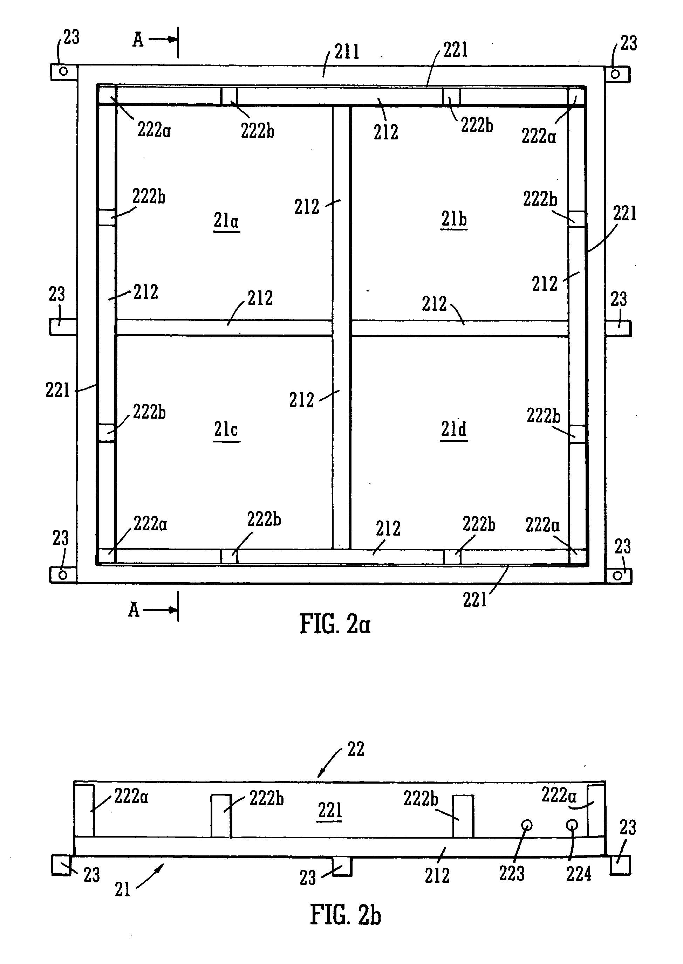

The frame 2, shown more clearly in Figures 2a and 2b, is substantially square in plan and formed from aluminium sheet 211, 221 and tubing 212, 222a, 222b, 23. In this embodiment, the frame 2 is approximately one square meter in plan, the sheet material 211, 221 is approximately 1.5mm in thickness and the tubing 212, 222a, 222b, 23 has a cross-section of approximately 30mm x 30mm with a wall thickness of approximately 1.5mm. The inner and outer surfaces of the frame 2 are painted black. The frame 2 includes a base portion 21, a peripheral wall portion 22 and base supports 23.

The base portion 21 includes a base sheet 211 on top of which are welded a series of reinforcing tube portions 212. The peripheral wall 22 includes four wall sheets 221, corner uprights 222a and central uprights 222b. One of the peripheral wall sheets 221 includes two holes 223, 224 through its thickness. The peripheral wall 22 is welded to the base sheet 211 marginal to its peripheral edge and extends upwardly therefrom.

The base supports 23 are three lengths of tubing welded to two outer edges and the centre of the underside of the base sheet 211 such that they are parallel to each other.

The base portion 21 includes four recesses or depressions 21a, 21b, 21c, 21d. Each recess 21a, 21b, 21c, 21d is defined by the base sheet 211 and respective sections of reinforcing tubing 212.

The base insulating layer 3 is made of expanded polystyrene foam with a thickness of approximately 20mm. The base insulating layer 3 comprises four sections, one of which is located in each of the aforementioned recesses 21a, 21b, 21c, 21d.

The lower energy storage layer 4 is made of a ceramic or mineral material, a suitable material being a granular stone material expelled from volcanoes, such as that known as "picon", The thickness of the layer 4 is approximately 10mm. The granules are placed on top of the base insulating layer sections 3 and substantially fill the remainder of the aforementioned recesses 21a, 21b, 21c, 21d defined within the base portion 21.

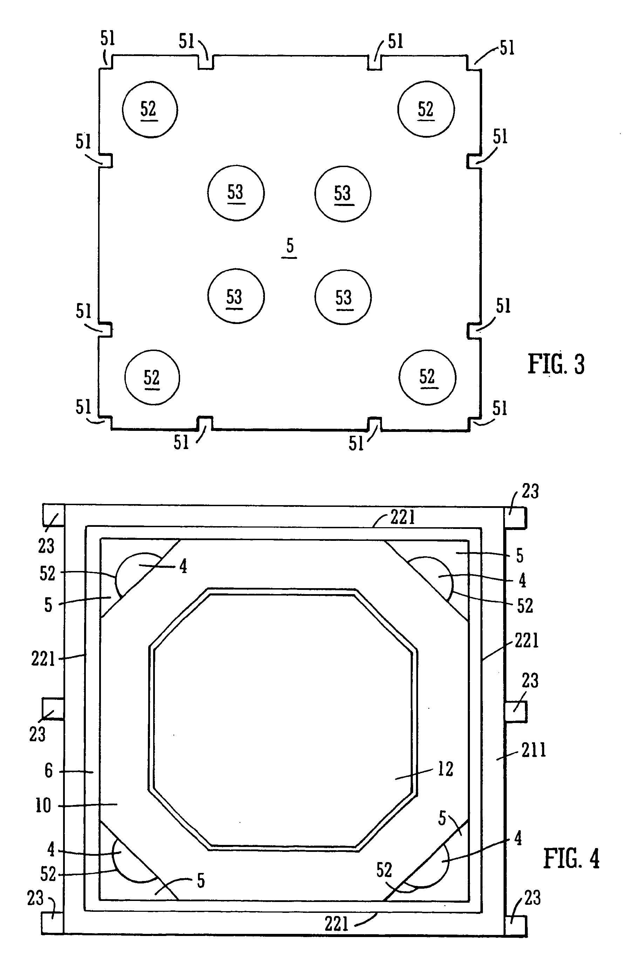

The base plate 5, shown more clearly in Figure 3, is substantially square in plan, made of 1.5mm sheet aluminium, painted black, and sized to fit within the frame, 2 on top of the lower energy storage layer 4. The base plate 5 includes cut outs 51 to allow the peripheral wall uprights 222a, 222b to pass there-through. The base plate 5 also includes holes 52, 53 through its thickness. In the Figure, there is shown four outer holes 52 and four inner holes 53 formed through its thickness. One of each of the holes 52, 53 is positioned so as to lie above the aforementioned recesses 21a. 21b, 21c, 21d with the base plate in place.

The peripheral wall insulating layer 6 is also made of expanded polystyrene foam. The layer 6 is approximately 10mm thick and comprises twelve sections. The sections 6 are located adjacent the peripheral wall sheets 221 between the uprights 222a, 222b of the peripheral wall 22 of the frame 2.

Turning to Figure 1, which shows a collector for domestic use, the working fluid tubing 7 is made of black polyvinyl chloride and has an outer diameter of 12 mm, an inner diameter of 10 mm and is approximately 150 meters in length. The tubing 7 includes an inlet 71 and an outlet 72 and is located in the collector 1 on top of the base plate 5. The inlet 71 is connected to one of the aforementioned holes 223 in the peripheral wall 22 and corresponds to the portion of the tubing 7 located adjacent an upper outer edge of the collector 1.

The tubing 7 is coiled from the outside inwardly to form a first layer of tubing. The tubing 7 then drops down and is coiled from the inside outwardly to form the second layer of tubing. Finally, the tubing drops down and is coiled from the outside inwardly to form the third layer of tubing, and the end of the tubing provides the outlet 72. which is connected to the other of the aforementioned holes 224 in the peripheral wall 22. The coil is configured such that all or at least the majority of the holes 52, 53 remain uncovered in use, thereby to expose a portion of the lower thermal energy storage layer 4- Which is to say that the tubing 7 is coiled so as to span the sheets between, the holes 52 and 53.

The spacer tubing 8 is also made of polyvinyl chloride, The spacer tubing 8 is located at a plurality of distinct positions between adjacent layers of working fluid tubing 7 to ensure separation therebetween.

The support sheet 9 is made of glass with a thickness of approximately 5mm. The support sheet 9 is substantially square in plan with chamfered corners and sized to fit within the frame 2 on top of the central uprights 222b to expose a portion of the outer base plate holes 52.

In this embodiment, the insulating layer of the cover is made up of the layer of air cellular cushioning material 10, the spacer element 11 and the upper thermal energy storage layer 12.

The layer of air cellular cushioning material 10 comprises two layers of bubble wrap, each layer being approximately six millimetres in thickness with bubbles of approximately ten millimetres in diameter. The bubble wrap extends around the periphery of the support sheet 9, as shown in Figure 4.

The spacer element 11 extends around the inner edge of the layer of air cellular cushioning material 10. In this embodiment, the spacer element 11 comprises lengths of aluminium honeycomb material.

The upper thermal energy storage layer 12 is made of a ceramic or mineral material, a suitable material being a granular stone material expelled from volcanoes, such as that known as "picon". The thickness of the layer 12 is approximately 10mm. The granules are placed within the cavity defined by the support sheet 11 and the spacer element 11.

The cover sheet 13 is made of tinted glass, or "black glass", with a thickness of 6mm. The cover sheet is substantially square in plan and sized to fit within the frame 2 on top of the corner uprights 222a and the upper thermal energy storage layer 12 with the peripheral wall insulating layer 6 in place. The cover sheet 13 is secured to the frame using a strip of aluminium (not shown) which is secured to the frame 2 and overlaps the peripheral edge of the cover sheet 13 such that a substantially sealed enclosure is provided.

In use, the cover sheet 13 is exposed to a source of radiant heat, for example the sun. A portion of the radiation is absorbed by the cover sheet, part of which is transferred to the upper thermal energy storage layer 12 by conduction. A further portion of the radiation penetrates through the cover sheet 13 and is absorbed directly by the volcanic granules in the upper and lower energy storage layers 12, 4. It will be appreciated that the majority of the energy will be absorbed by the upper energy storage layer 12 due to the layer 12 due to the larger exposed surface area.

The absorbed thermal energy is then dissipated within the respective layers and the open space which surrounds the working fluid tubing 7. The heat energy is then gradually transmitted by both conduction and convection to the working fluid tubing to heat the working fluid. The air gap between the tubing 7 and/or between the tubing 7 and support sheet 9 aids the convection of heat and absorption of energy by the working fluid.

The fluid is pumped either using a thermosyphon arrangement or an external pump. The working fluid tubing 7 is coiled such that the fluid enters the inlet 71, travels through the outermost portion of the first layer of tubing 7 toward the centre thereof. On reaching the centre of the top layer, the fluid drops down to the second layer and spirals outwardly and so on until the fluid reaches the outlet 72. This arrangement results in colder working fluid being circulated within the top layer, which is advantageous due to the upper portion of the collector containing the majority of the heat energy, as mentioned above.

The sealed enclosure will gradually increase in temperature until it reaches thermal equilibrium through absorption, storage and dissipation of radiation energy in both the upper and lower energy storage layers 12, 4.

When the available solar radiation diminishes, for example at sunset, the temperature of the cover layers 9, 12, 13 begins to decrease. Heat energy stored in the lower energy storage layer therefore dissipates through both conduction, to the tubing 7, 8 directly, and convection, to the relatively large air cavity surrounding the tubing 7, 8 by free convection. This is aided by the aforementioned holes 52, 53 in the base plate 5.

This arrangement provides a more consistent heating mechanism which is less susceptible to fluctuations in available solar radiation, for example where there is a plurality of large and dense clouds (Cumulus cloud).

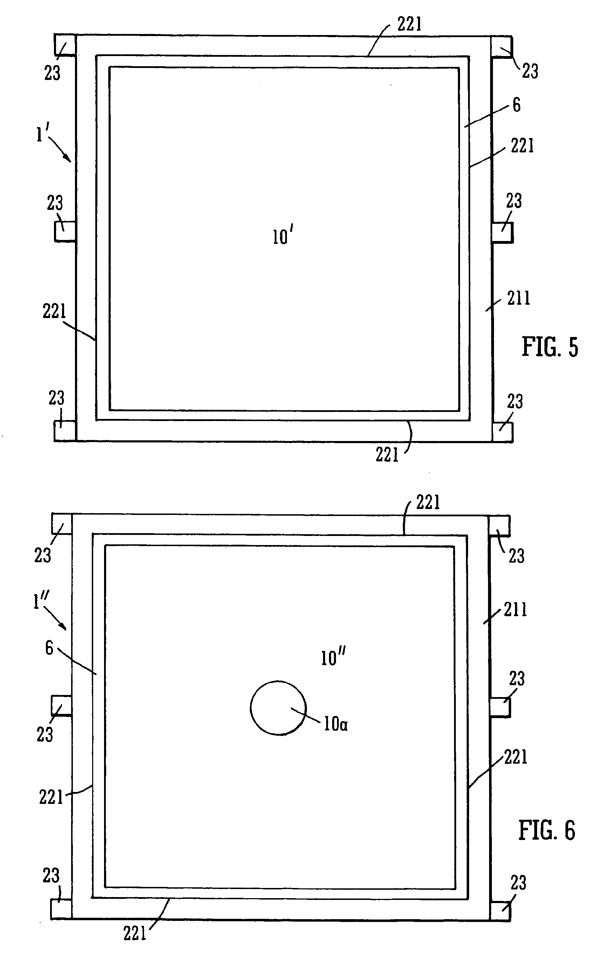

Referring now to Figure 5 there is shown a second embodiment of the energy collector of the invention. This energy collector 1' is similar to the energy collector 1 of Figures 1 to 4 wherein like references represent like components and consequently these will not be described herein.

in this embodiment, both the layer of air cellular cushioning material 10' and the support sheet (not shown) are square in plan and cover the same surface area as the cover sheet 13. The cover sheet 13 and support sheet (not shown) of this embodiment are both made from clear glass. The insulating layer does not include an upper thermal energy storage layer 12 in this embodiment.

In use, the radiation penetrates the cover sheet 13, the air cellular cushioning material 10' and the support sheet (not shown). A portion of the radiation is absorbed by the working fluid tubing 7 and transferred directly to the working fluid. A further portion is absorbed by the base plate 5 and yet a further portion is absorbed by the ceramic or mineral material, e.g. volcanic granules in the lower energy storage layer which are , exposed thereto by virtue of the holes 52, 53 in the base plate 5.

Thermal energy is absorbed, stored and dissipated in a similar fashion to that which is described above in relation to the embodiment of Figures 1 to 4.

Referring now to Figure 6 there is shown a third embodiment of the energy collector of the invention. This energy collector 1" is similar to the energy collector 1 of Figures 1 to 4 wherein like references represent like components and consequently these will not be described herein.

In this embodiment, both the layer of air cellular cushioning material 10" and the support sheet (not shown) are square in plan and cover the same surface area as the cover sheet 13. The layer of air cellular cushioning material 10" also includes a hole 10a through its centre. The cover sheet 13 and support sheet (not shown) of this embodiment are both made from clear glass. The insulating layer does not include an upper thermal energy storage layer 12 in this embodiment.

In use, the radiation penetrates the cover sheet 13, the air cellular cushioning material 10", the hole 10a and the support sheet (not shown). A portion: of the radiation is absorbed by the working fluid tubing 7 and transferred directly to the working fluid. A further portion is absorbed by the base plate 5 and yet a further portion is absorbed by the ceramic or mineral material, e.g. volcanic granules in the lower energy storage layer which are exposed thereto by-virtue of the holes 52, 53 in the base plate 5.

Thermal energy is absorbed, stored and dissipated in a similar fashion to that which is described above in relation to the embodiment of Figures 1 to 4.

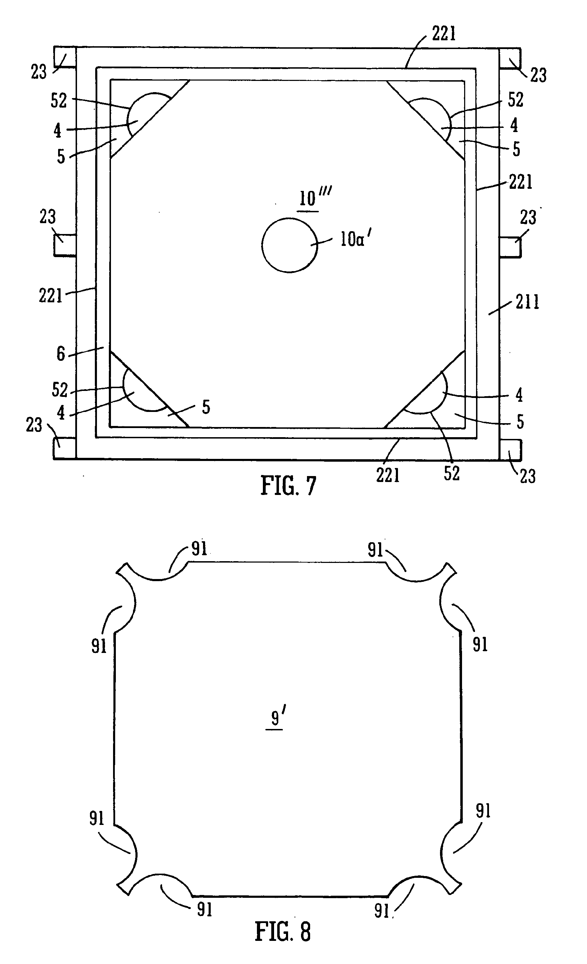

Referring now to Figure 7 there is shown a further embodiment of the, energy collector of the invention. This energy collector 1'" is similar to the energy collector 1 of Figures 1 to 4 wherein like references represent like components and consequently these will not be described herein.

In this embodiment, the layer of air cellular cushioning material 10'" covers the same surface area as the support sheet 9, which both include chamfered corners, and includes a hole 10a' through its centre. The cover sheet 13 and support sheet 9 of this embodiment are both made from clear glass. The insulating layer does not include an upper thermal energy storage layer 12 in this embodiment.

In use, the radiation penetrates the cover sheet 13, the air cellular cushioning material 10"', the hole 10a', the support sheet 9 and the chamfered corners. A portion of the radiation is absorbed by the working fluid tubing 7 and transferred directly to the working fluid. A further portion is absorbed by the base plate 5 and yet a further portion is absorbed by the ceramic or mineral material, e.g. volcanic granules in the lower energy storage layer which are exposed thereto by virtue of the holes 52, 53 in the base plate 5.

Thermal energy is absorbed, stored and dissipated in a similar fashion to that which is described above in relation to the embodiment of Figures 1 to 4.

An alternative embodiment of support sheet 9' is shown in Figure 8 which is substantially square in plan and includes two arcuate cutouts 91 at each of its corners.

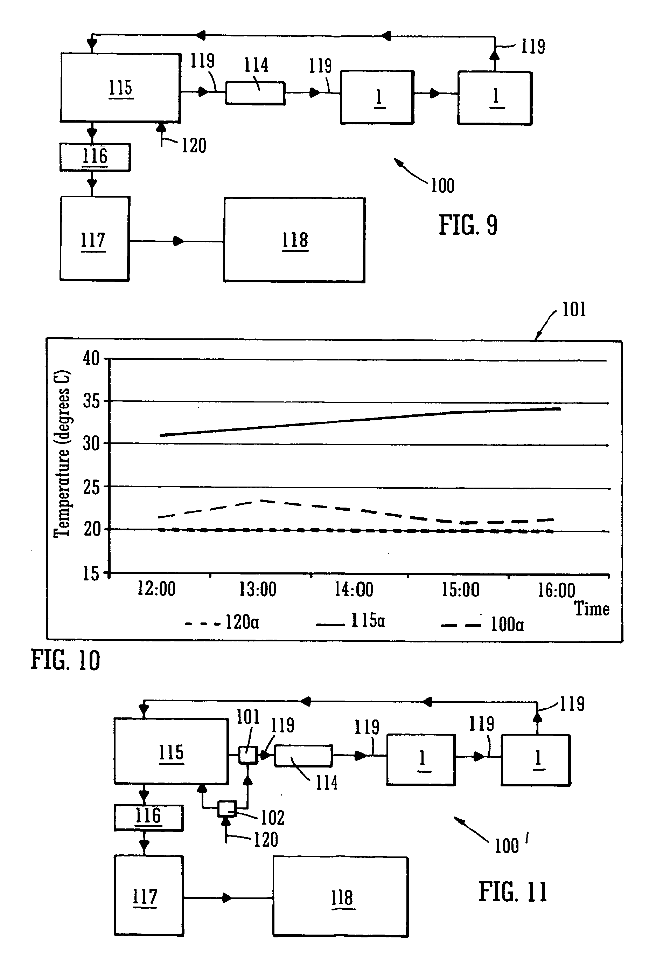

Referring now to Figure 9, there is shown an exemplary domestic water heating system 100 comprising two energy collectors 1 of the first embodiment described above which are connected in series, a collector pump 114, a tank 115, a boiler pump 116, a standard domestic boiler 117 and a domestic water system 116.

The tank 115 is a 300 litre insulated water tank which includes a mains water inlet 120 and a ballcock arrangement (not shown) for maintaining the water level. The tank 115 contains polystyrene balls and is insulated with a casing made up of 50mm polystyrene sheet and a wooden surround. The heating circuit includes a series of pipes 119 connecting, in series, the tank 115, the collector pump 114 and the energy collectors 1.

In use, water is supplied to the tank 115 by the mains water inlet 120. The water is pumped from the tank 115 by pump 114, at a rate of approximately 3 litres per minute, through each of the energy collectors 1 in turn, where it is heated through the process described above, and back to the water tank 115. Heated water is then drawn from the tank 115 by the boiler pump 116 to supply the boiler 117 as required.

The graph of Figure 10 shows the variation, over the course of the day, of the ambient "in sun" air temperature 100a. the mains water inlet temperature 120a and the tank water temperature 115a. The measurements shown in the graph relate to a domestic water system 100 which has reached equilibrium after a number of days in use, hence the 30 degree Centigrade starting temperature.

It can be seen from the graph that there is a gradual increase in tank water temperature 115a despite the variation in ambient air temperature 100a.

The insulated water tank, 115 serves as a thermal energy storage medium which supplies warm or hot water directly to the domestic boiler 117 through the boiler pump 116. Any additional heat required to bring the water to the requisite temperature is provided through standard means, for example gas or electricity. Large fluctuations in demand may therefore be compensated for by the boiler 117. This arrangement will result in a considerable reduction in the power consumption of the boiler 117 with the additional benefit of increasing the capacity of the boiler 117, thereby improving the reliability of existing boiler installations and ensuring that water supplied therefrom may be at a relatively high flow rate.

Figure 11 shows a further water heating system 100' comprising the same components as the system of Figure 5 with the addition of a heating circuit control valve 101 and a tank bypass valve 102. The bypass valve 102 is connected to the mains inlet 120 and supplies the control valve 101 in one position and the tank 115 in a second position.

The control valve 101 and the tank bypass valve 102 both include control circuitry (not shown) for receiving feedback from the aforementioned ballcock water level arrangement (not shown).

In use and with the tank 115 filled, the control valve 101 allows water from the tank 115 to circulate through the alternative water heating system 100' with like components to the water heating system 100 of Figure 9 denoted by the same reference numerals. As the heated water is drawn from the tank 115, a 'low water level' signal is received by the control valve circuitry (not shown) which causes the control valve 101 to, close the supply from the tank 115 and open the supply from the mains inlet 120 via the bypass valve 102. Low temperature water is supplied directly to the heating circuit, however, it will be appreciated that the control valve 101 is adapted to limit the flow from the mains inlet 120 to 3 litres per minute.

Moreover, if demand exceeds the aforementioned 3 litres per minute for an extended period of time and the water in the tank reaches a critically low level, a low level alarm' signal is received by the bypass valve control circuitry (not shown). The bypass valve 102 then closes the supply to the control valve 101 and opens the valve to the tank 115, whereby low temperature water is supplied directly to the tank at mains pressure.

The alternative water heating system 100' is more efficient than the arrangement 104 of Figure 9 as a result of the greater difference in temperature between the water supplied by the mains inlet 120 and the energy collector 1. However, the additional valves 101, 102 require greater capital expenditure, which may not be justified in some cases.

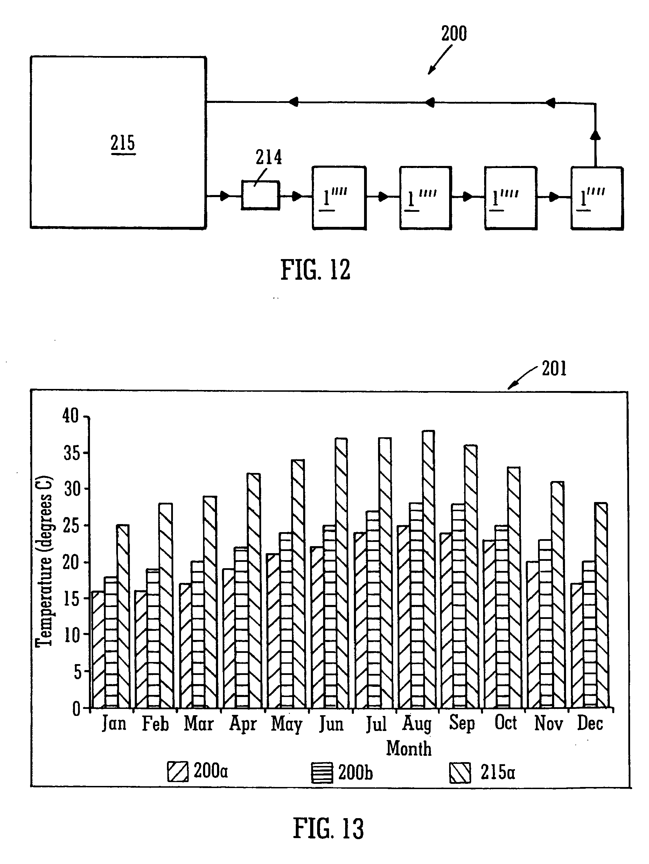

Referring now to Figure 12, there is shown an exemplary water heating system 200 for a swimming pool 215 which incorporates a further embodiment of the energy collector 1"". The swimming pool heating system 200 includes four energy collectors 1"" connected in series, a collector pump 214 and a swimming pool 215.

The swimming pool 215 is a conventional 50,000 litre in-ground swimming pool 215.

The energy collector 1"" is similar to the aforementioned first embodiment of the energy collector 1, but differs in the size and length of the working fluid tubing 7. The working fluid tubing 7 in this embodiment has an outer diameter of 15mm, an inner diameter of 13mm and is approximately 120 meters in length.

In use, water is pumped from the swimming pool 215 at a rate of approximately 8 litres per minute, through each of the energy collectors 1"" and back into the swimming pool 215.

The graph of Figure 13 shows the estimated monthly values for the overall average temperature 200a, the average daily maximum temperature 200b and the average swimming pool temperature 215a over the course of the year. The measurements shown in the graph relate to a swimming pool water heating system 200 which has reached equilibrium after a number of weeks in use and are based on experiments conducted by the inventors.

It can be seen from the graph that the average swimming pool temperature 215a is between 9°C and 15°C above the overall average temperature 200a.

The exemplary embodiments of the invention disclosed herein should not be construed as the only means of carrying out the invention. In particular, several variations to the size of tubing 7, 8, thickness of the various layers 3. 4, 6, 12, and sheet 9, 13, as well as absorbing surface area are all envisaged without departing from the scope of the invention.

The insulating layer need not be configured as disclosed in the embodiments disclosed herein. For example, the upper thermal energy storage layer 12 may cover the entire surface area of the cover and may include openings for allowing solar radiation to penetrate therethrough to be absorbed by the working fluid tubing 7 and/or the lower thermal energy storage layer 4. Additionally or alternatively, the insulating layer may comprise any suitable insulating material.

The thermal energy storage layers 4, 12 may comprise any suitable materials which may function as a heat sink. For example, the use of ceramic or any other suitable material is within the scope of the invention.

The spacer tubing 8 may be coiled or in individual lengths and may run parallel or perpendicular or at any angle relative to the working fluid tubing 7.

Whilst the tubing 7, 8 described above is circular and made of polyvinyl chloride, several different types of tubing are envisaged without departing from the scope , of the invention. For example, several different cross-sectional shapes, for example square and/or polygon, and materials, for example copper, stainless steel or nylon, may be used.

The frame 2 may be formed of any suitable material, for example steel or other metal or even plastics material. Sizing of the metal sheets and/or tubing may be varied according to particular requirements. The support sheet 9 may comprise a wire support type mesh rather than glass.

The size and/or number and/or layout of holes 52, 53 in the base plate 5 may be varied and may be covered by or incorporate screens or grids. Alternatively, the base plate may be replaced by a screen or grid.

The insulating layers 3, 6 may comprise any suitable foam or other insulating material.

The thickness of the air cellular cushioning material 10 and the configuration of cells may vary depending on the application. Alternatively, the air cellular cushioning material 10 may be replaced with any suitable material, for example solid transparent plastics material or glass.

Whilst the applications discussed herein included direct use of the working fluid, the use of a heat exchanger is also envisaged.

Also, the ballcock arrangement for regulating the water level in the tank may be replaced with a programmable logic circuit or any other suitable means.

Experimentation has shown that the use of polystyrene balls and a polystyrene casing for the tank results in a heat loss overnight of approximately 2°C (from 30°C), which was nine times less than the heat loss in a system absent the polystyrene balls and polystyrene casing.

## Claims

1. An energy collector (1, 1', 1 ", 1"', 1"") for absorbing solar energy comprising an enclosure and tubing (7) located therein, the enclosure comprising a base (21) and a cover (9,10,11,12.13), the base (21) comprising thermal energy storage means (4), the cover (9, 10, 11, 12, 13) comprising a cover sheet (13) and an insulating layer (10, 11, 12), the tubing (7) being at least partially located between the cover (9,10,11,12,13) and said thermal energy storage means (4).

2. A collector as claimed in Claim 1, wherein at least a portion of the tubing (7) is spaced from the cover (9, 10, 11, 12, 13).

3. A collector as claimed in any preceding Claim, further comprising one or more spacers (8) for separating adjacent portions of tubing (7).

4. A collector as claimed in any preceding Claim, wherein the insulating layer (10, 11, 12) comprises a layer (10, 10', 10", 10"') of air cellular material, for example covering the whole or part of the surface area of the cover.

5. A collector as claimed in any preceding Claim, wherein the insulating layer (10, 11, 12, 13) comprises a further thermal energy storage means (12).

6. A collector as claimed in any preceding Claim, wherein said thermal energy storage means (4) and/or said further thermal energy storage means (12) comprises a thermal energy storage layer and/or a further thermal energy storage layer which includes a ceramic and/or mineral material.

7. A collector as claimed in any preceding Claim, wherein the cover sheet (13) has a larger area in plan than said energy storage means (4), thereby to expose an absorption surface of said thermal energy storage means (4) for absorbing solar energy.

8. An energy collector (1, 1', 1", 1"', 1"") for absorbing solar energy comprising an absorption surface, a thermal energy storage layer (4) and tubing (7) having an inlet and an outlet for fluid to pass therethrough, at least a portion of the tubing (7) being in thermal contact with the thermal energy storage layer (4), wherein the thermal energy storage layer (4) comprises a ceramic or mineral material.

9. A collector as claimed in any preceding Claim, wherein the thermal energy storage layer (4) comprises a porous granular stone material, such as that expelled from volcanoes.

10. A collector as claimed in any preceding Claim, further comprising an alternative heating source, for example a gas powered or electrical heating source.

11. Apparatus for heating a fluid comprising a collector (1, 1', 1 ", 1"', 1"") as claimed in any preceding Claim and energy accumulator means (115, 215).

12. Apparatus as claimed in Claim 11, wherein said energy accumulator means (115) is a tank for storing heated fluid, said tank comprising insulating members therein, for example polystyrene balls.
